# EUROPEAN PATENT APPLICATION

(11) **EP 4 427 881 A1**
(43) Date of publication of application: **11.09.2024**
(21) Application number: 24160452.9
(22) Date of filing: 29.02.2024
(51) Int. Cl.: B24B 31/00, B22F 10/66, B24B 31/02, B24B 31/06, B24B 31/14, B24B 39/00, B24B 39/04, B24C 1/08, B33Y 40/20, B22F 3/24

(54) **PROCESSING METHOD FOR ADDITIVELY MANUFACTURED ARTICLE**

(30) Priority: 10.03.2023 JP 2023037829
(71) Applicant: Sintokogio, Ltd., Nagoya-shi, Aichi 450-6424 (JP)
(72) Inventor: NISHIJIMA, Hitoshi, Nagoya-shi, Aichi (JP); HIRANO, Masao, Nagoya-shi, Aichi (JP); TSUJI, Toshiya, Nagoya-shi, Aichi (JP)
(74) Representative: Wittmann, Ernst-Ulrich

(57) **Abstract**

A processing method for an additively manufactured article, the processing method including: accommodating an additively manufactured article containing metal and a medium made of metal in a barrel polishing device; and reducing a roughness of a surface of the additively manufactured article and applying a residual stress to the additively manufactured article by stirring the additively manufactured article and the medium, in which a surface of the medium includes a curved surface.

## Description

### CROSS-REFERENCE TO RELATED APPLICATIONS

This application is based on and claims the benefit of priority from Japanese Patent Application No. 2023-037829 filed on March 10, 2023, and the entire contents of which are incorporated herein by reference.

### TECHNICAL FIELD

The present disclosure relates to a processing method for an additively manufactured article.

### BACKGROUND

WO 2019/008901 A discloses a shot peening method. This method is a method of projecting a shot media onto an object to be processed, which is a structure in which a first member and a second member are joined to each other with a welded portion interposed therebetween, in which the shot media is projected from a nozzle to a welded peripheral portion adjacent to the welded portion on a surface of the object to be processed in a state where a tip of the nozzle is directed.

### SUMMARY

By the way, an additively manufactured article may have a large surface roughness and a small residual stress immediately after additive manufacturing as compared with a metal member manufactured by another metal processing. In the shot peening method described in WO 2019/008901 A, although the residual stress can be applied to the surface of the object, there is no disclosure that the roughness of the surface of the object can be sufficiently reduced. Therefore, in order to appropriately reduce the roughness of the surface of the additively manufactured article, it may be necessary to further execute other processing, and thus the number of man-hours related to the processing of the additively manufactured article may increase. Therefore, there is a demand for a processing method for an additively manufactured article capable of appropriately reducing a roughness of the surface of the additively manufactured article and applying a residual stress to the additively manufactured article.

A processing method for an additively manufactured article according to the present disclosure includes: accommodating an additively manufactured article containing metal and a medium made of metal in a barrel polishing device; and reducing a roughness of a surface of the additively manufactured article and applying a residual stress to the additively manufactured article by stirring the additively manufactured article and the medium, in which a surface of the medium includes a curved surface.

According to the present disclosure, the roughness of the surface of the additively manufactured article containing metal can be appropriately reduced, and the residual stress can be applied to the additively manufactured article.

### BRIEF DESCRIPTION OF THE DRAWINGS

FIG. 1 is a flowchart of a processing method for an additively manufactured article according to an embodiment;
FIG. 2 is a front view schematically illustrating a barrel polishing device used in a processing method for an additively manufactured article according to an embodiment;
FIG. 3 is a test result of a roughness of a surface of an additively manufactured article with respect to a processing condition according to Example; and
FIG. 4 is a test result of a residual stress of the additively manufactured article with respect to the processing condition according to Example.

### DETAILED DESCRIPTION

### [Outline of Embodiment of Present Disclosure]

First, an outline of an embodiment of the present disclosure will be described.

(Clause 1) A processing method for an additively manufactured article according to one aspect of the present disclosure includes accommodating and applying. The accommodating includes accommodating an additively manufactured article containing metal and a medium made of metal in a barrel polishing device. The applying includes reducing a roughness of a surface of the additively manufactured article and applying a residual stress to the additively manufactured article by stirring the additively manufactured article and the medium. A surface of the medium includes a curved surface.

According to this processing method for an additively manufactured article, the applying includes stirring the additively manufactured article and the medium, so that the medium is pressed against the additively manufactured article. Since the medium is made of metal and has a larger specific gravity than other constituent materials such as plastic, the medium is pressed against the additively manufactured article with a larger force. Therefore, this method can easily apply the residual stress to the additively manufactured article. Furthermore, the roughness of the surface of the additively manufactured article containing metal is generally larger than the roughness of the surface of a metal member manufactured by another metal processing. The medium made of metal can be used at the time of surface processing of an object having a small surface roughness. However, in this processing method for an additively manufactured article, since the additively manufactured article can be deformed (plastically deformed) by stirring the additively manufactured article containing metal and the medium made of metal, the roughness of the surface of the additively manufactured article can be appropriately reduced. Moreover, since the surface of the medium includes the curved surface, the formation of dents on the surface of the additively manufactured article is suppressed as compared with the medium including an acute corner portion, and the increase in the roughness of the surface of the additively manufactured article can be suppressed. Therefore, this processing method for an additively manufactured article can appropriately reduce the roughness of the surface of the additively manufactured article containing metal, and apply the residual stress to the additively manufactured article.

(Clause 2) In the processing method for an additively manufactured article according to Clause 1, the applying may include stirring the additively manufactured article and the medium without using abrasive grains. In this case, according to the processing method for an additively manufactured article, a surface layer of the additively manufactured article is suppressed from being scraped. According to the processing method for an additively manufactured article, as compared with the case of stirring using the abrasive grains, the surface layer portion of the additively manufactured article to which the residual stress is applied is suppressed from being scraped by the abrasive grains, so that it is possible to obtain the additively manufactured article to which the residual stress is appropriately applied after execution of the processing method.

(Clause 3) In the processing method for an additively manufactured article according to Clause 1 or 2, the medium may be a steel ball. In this case, since the medium is spherical, the contact of the medium with the additively manufactured article becomes uniform, and thus the occurrence of the dents can be further suppressed.

(Clause 4) In the processing method for an additively manufactured article of any one of Clauses 1 to 3, the additively manufactured article may be a blade of an aircraft engine or a medical component. In this case, according to the processing method for an additively manufactured article, the additively manufactured article has a reduced surface roughness and a reduced air resistance, so that the additively manufactured article can be used for a blade of an engine of an aircraft. Furthermore, in the additively manufactured article, the surface roughness is reduced, and a function required for the medical component such as cell peelability is improved, and thus the additively manufactured article can be used for the medical component.

(Clause 5) In the processing method for an additively manufactured article according to any one of Clauses 1 to 4, the barrel polishing device may be a centrifugal barrel polishing device, the medium may be spherical, and a diameter of the medium may be 20 mm or less. In this case, since the barrel polishing device is a centrifugal barrel polishing device, it is possible to perform adjustment so that the medium is strongly pressed against the additively manufactured article at the time of stirring as compared with the case of other types of barrel polishing devices. Furthermore, since the medium is spherical, the contact of the medium with the additively manufactured article becomes uniform, and thus the occurrence of the dents on the surface of the additively manufactured article can be suppressed. Moreover, the diameter of the medium can be set according to a size of the barrel polishing device, a material and a shape of the additively manufactured article, a target value of the residual stress to be applied, and the like.

### [Exemplary Embodiment of Present Disclosure]

Hereinafter, an embodiment of the present disclosure will be described with reference to the drawings. Note that, in the following description, the same or equivalent elements are denoted by the same reference signs, and redundant description will not be repeated. The dimensional ratios in the drawings do not necessarily coincide with those in the description. The words "upper", "lower", "left", and "right" are based on the illustrated state and are used for convenience.

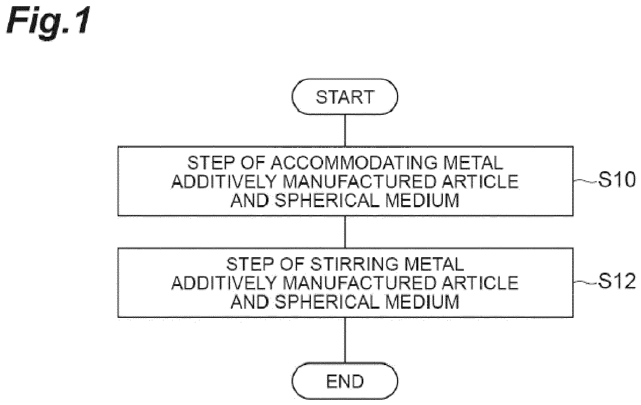

FIG. 1 is a flowchart of a processing method for an additively manufactured article according to an embodiment. The processing method for an additively manufactured article illustrated in FIG. 1 is a method of stirring an additively manufactured article and a medium to reduce a roughness of a surface of the additively manufactured article and to apply a residual stress to the additively manufactured article. The processing method for an additively manufactured article of the present embodiment is applied to, for example, an additively manufactured article used for a blade of an aircraft engine or a medical component. The medical component is, for example, an artificial bone or an artificial joint.

The additively manufactured article is an additively manufactured article containing metal. The additively manufactured article is a manufactured article by additive manufacturing. In the additively manufactured article, for example, at least a part of the surface layer is made of metal. In the additively manufactured article, for example, a part of the surface layer may be made of metal, and a part of the surface layer may be made of resin. In this case, the resin may be exposed on the surface of the additively manufactured article. The additively manufactured article of the present embodiment is made of, for example, metal. The additively manufactured article is formed, for example, layer by layer by melting a metal powder. The metal powder is melted by a laser or the like. The surface of the additively manufactured article immediately after being formed by melting the metal powder has, for example, an arithmetic average roughness Ra defined in JIS-B0601:2013 of about 5 µm or more and 50 µm or less, and the surface roughness is very large.

Examples of the material of the metal powder include pure iron and an iron alloy. The iron alloy may contain stainless steel and maraging. The material of the metal powder may be pure aluminum and an aluminum alloy. The material of the metal powder may be pure copper and a copper alloy. The material of the metal powder may be pure nickel and a nickel alloy. The nickel alloy may contain a nickel-based superalloy. The material of the metal powder may be a cobalt alloy. The material of the metal powder may be pure titanium and a titanium alloy. The material of the metal powder may be pure magnesium and a magnesium alloy. The material of the metal powder may be a titanium-based alloy. The material of the metal powder may be cemented carbide. The cemented carbide may contain tungsten carbide.

A surface of the medium includes a curved surface. In a case where the medium has corners, the medium includes polyhedrons in which all corners present a rounded shape. The medium includes a polyhedron in which all corners are obtuse and in which the corners present a rounded shape. As an example of the polyhedron, the medium includes a sputnik (Saturn shape). The Saturn shape includes a shape in which a part of a sphere is enlarged in a radial direction. In a case where the medium is a sputnik medium, the fluidity in a barrel polishing device described later is high as compared with a case where the medium has another shape. The medium of the present embodiment is spherical (sphere). In a case where the medium is spherical, all surfaces of the medium include gently curved surfaces. Therefore, in a case where the medium is spherical, the cutting of the surface layer of the additively manufactured article can be further suppressed as compared with the case where the medium has another shape.

A diameter of the medium is 20 mm or less. The diameter of the medium may be changed in accordance with a size of a barrel polishing device 10 described later. For example, in a case where a volume of a barrel tank 11 of the barrel polishing device 10 described later is 8 L, a medium having a diameter of 20 mm or less is selected from the viewpoint of stirring efficiency at the time of processing.

The medium is made of metal. A hardness of the medium is, for example, greater than a hardness of the additively manufactured article. As a result, in the stirring (step S12) to be described later, inclusion of a part of the medium in the dust generated by collision between the medium and the additively manufactured article during stirring is reduced. The medium of the present embodiment is a steel ball. The material of the medium is, for example, SUJ2. In a case where the medium is made of SUJ2, the cost can be kept low and the hardness is high as compared with the case where the medium is made of another steel material or another material, so that the additively manufactured article is easily plastically deformed. The medium may be made of, for example, a metal material such as ceramic or a material covered with a resin coating, or may be made of a combination of iron, ceramic, resin, and the like. In a case where the medium is made of ceramic, impurities other than the additively manufactured article can be suppressed from remaining in the barrel polishing device in the processing method for an additively manufactured article described later. In a case where the medium is coated with a resin, formation of dents by the medium on the surface of the additively manufactured article can be suppressed in the processing method for an additively manufactured article described later. The medium may be made of, for example, the same kind of metal material as the additively manufactured article.

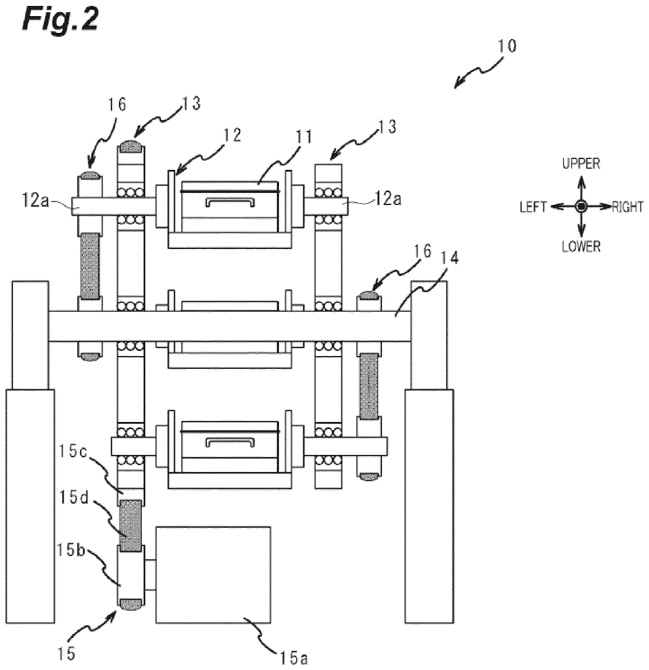

The processing method for an additively manufactured article of the present embodiment is realized by a barrel polishing device. FIG. 2 is a front view schematically illustrating a barrel polishing device used in a processing method for an additively manufactured article according to an embodiment. A barrel polishing device 10 illustrated in FIG. 2 is a horizontal centrifugal barrel polishing device. Note that the horizontal centrifugal barrel polishing device includes a revolution axis and a rotation axis extending in a horizontal direction, and is a device that polishes a workpiece in a barrel tank by revolving the barrel tank about the revolution axis while rotating the barrel tank about the rotation axis.

As illustrated in FIG. 2, the barrel polishing device 10 includes a plurality of barrel tanks 11, a plurality of barrel tank cases 12, a pair of turrets 13 (revolution disks), a revolution shaft 14, a drive mechanism 15, and a driven mechanism 16. In one embodiment, the barrel polishing device 10 includes four barrel tanks 11. FIG. 2 illustrates three barrel tanks 11 out of the four barrel tanks 11. An additively manufactured article and a medium are accommodated in each of the barrel tanks 11. Each of the barrel tank cases 12 includes a rotation shaft 12a. The drive mechanism 15 includes a drive motor 15a, a motor pulley 15b, a revolution pulley 15c, and a drive belt 15d.

In the barrel polishing device 10, when the drive motor 15a operates, a driving force is transmitted to the turret 13 via the motor pulley 15b, the drive belt 15d, and the revolution pulley 15c, and the turret 13 rotates about the revolution shaft 14. As the turret 13 rotates, the barrel tank 11 fixed to the barrel tank case 12 turns (revolves) about the revolution shaft 14 as an axis. Furthermore, by the driven mechanism 16, the barrel tank 11 rotates in a direction opposite to a rotation direction of the turret 13 about the rotation shaft 12a as an axis. As described above, the barrel tank 11 rotates about the horizontally extending rotation shaft 12a and revolves about the horizontally extending revolution shaft 14. That is, the barrel tank 11 performs a planetary motion with the rotation shaft extending horizontally as an axis.

Note that the barrel polishing device used in the processing method for an additively manufactured article is not limited to the barrel polishing device 10 illustrated in FIG. 2. For example, the barrel polishing device used in the processing method for an additively manufactured article may be any of a vibratory barrel polishing device, a fluid barrel polishing device, a rotary barrel polishing device, or a gyro barrel polishing device. For example, in a case where the barrel polishing device is a vibratory barrel polishing device, even a relatively large additively manufactured article can be appropriately accommodated in the barrel polishing device.

Referring back to FIG. 1, the description is continued. The processing method for an additively manufactured article includes the accommodating (step S10) and the stirring (step S12). In the accommodating(step S10), the additively manufactured article and the medium are accommodated in the barrel tank 11 of the barrel polishing device 10. For example, in a case where the volume of the barrel tank 11 is 8 L, a total amount of the additively manufactured article and the medium is adjusted to 6 L or less and 15 kg or less. At this time, the abrasive grains are not accommodated in the barrel tank 11.

Subsequently, in the stirring (an example of the applying: step S12), the additively manufactured article and the medium are stirred to reduce a roughness of the surface of the additively manufactured article and apply a residual stress to the additively manufactured article. For example, the barrel polishing device 10 rotates the barrel tank 11 about the rotation shaft 12a at a speed of 5 rpm or more and 600 rpm or less. For example, the barrel polishing device 10 revolves the barrel tank 11 around the revolution shaft 14 at a speed of 10 rpm or more and 300 rpm or less. A rotation-revolution ratio (a ratio of the rotation speed to the revolution speed) is -1 : 1, -2 : 1, or -0.5 : 1. Note that a negative value means that a rotation direction is different (opposite) with respect to a positive value. The barrel polishing device 10 stirs the additively manufactured article and the medium at the above-described rotation speed and revolution speed for 60 minutes, for example.

In the stirring (step S12), the additively manufactured article and the medium are stirred without using abrasive grains. That is, at least before the stirring (step S12) is performed, the accommodating abrasive grains in the barrel tank 11 of the barrel polishing device 10 accommodating the additively manufactured article is not performed. When the stirring (step S12) ends, the flowchart illustrated in FIG. 1 ends.

As described above, according to the processing method for an additively manufactured article, the additively manufactured article and the medium are stirred in the stirring (step S12), whereby the medium is pressed against the additively manufactured article. Since the medium is made of metal and has a larger specific gravity than other constituent materials such as plastic, the medium is pressed against the additively manufactured article with a larger force. Therefore, this method can easily apply the residual stress to the additively manufactured article. By this method, for example, a residual stress is applied to a metal portion included in the additively manufactured article. Since the residual stress is applied, this method can improve the durability of the additively manufactured article, and can enable long-term use. Furthermore, even in a case where a space, a gap, or the like is generated inside the additively manufactured article at the time of additive manufacturing, the space can be reduced by pressing the additively manufactured article against the medium, and the additively manufactured article in a densely stacked state can be obtained.

Moreover, the roughness of the surface of the additively manufactured article is generally larger than the roughness of the surface of a metal member manufactured by another metal processing. The medium made of metal can be used at the time of surface processing of an object having a small surface roughness. However, in this processing method for an additively manufactured article, since the additively manufactured article can be deformed (plastically deformed) by stirring the additively manufactured article containing metal and the medium made of metal, the roughness of the surface of the additively manufactured article can be appropriately reduced. Furthermore, since the surface of the medium includes the curved surface, the formation of the dents on the surface of the additively manufactured article is suppressed as compared with the medium including an acute corner portion, and the increase in the roughness of the surface of the additively manufactured article can be suppressed. Therefore, this processing method for an additively manufactured article can appropriately reduce the roughness of the surface of the additively manufactured article and apply the residual stress to the additively manufactured article.

Conventionally, in order to apply the residual stress and appropriately reduce the roughness of the surface of the additively manufactured article, for example, it is required to execute polishing by hand or barrel polishing by an operator after executing shot peening. However, in this case, the number of man-hours related to the processing of the additively manufactured article may increase. On the other hand, by executing the processing method for an additively manufactured article of the present embodiment using the barrel polishing device 10, it is possible to obtain both the effect of reducing the roughness of the surface and the effect of applying the residual stress described above, so that it is possible to reduce the number of man-hours related to the processing of the additively manufactured article and to improve the productivity.

Furthermore, in the applying in the processing method for an additively manufactured article, the additively manufactured article and the medium are stirred without using abrasive grains. In this case, according to the processing method for an additively manufactured article, a surface layer of the additively manufactured article is suppressed from being scraped.

Furthermore, in the processing method for an additively manufactured article, the medium is a steel ball medium. In this case, in the processing method for an additively manufactured article, for example, the cost can be kept low, and the hardness of the medium is relatively high, so that the additively manufactured article is easily plastically deformed.

Furthermore, in the processing method for an additively manufactured article, the additively manufactured article is a blade of an aircraft engine or a medical component. In this case, according to this processing method for an additively manufactured article, the additively manufactured article used as a blade of an aircraft engine has reduced surface roughness, reduced air resistance, and enhanced air flow separation. Furthermore, in the additively manufactured article used as a medical component, since the roughness of the surface is reduced, it is expected that the aesthetic appearance of an artificial bone is improved, the slidability of a sliding portion is improved, the long-term durability is improved, and the cell peelability of a component used in a short term such as a temporary fixing bolt is improved. Moreover, since the residual stress is applied by this processing method for an additively manufactured article, the reliability of the fatigue strength of the additively manufactured article is improved. Thus, the additively manufactured articles are used in the aircraft engine blade or the medical component.

Furthermore, in the processing method for an additively manufactured article, the barrel polishing device 10 may be a centrifugal barrel polishing device, the medium may be spherical, and the diameter of the medium may be 20 mm or less. In this case, since the barrel polishing device 10 is a centrifugal barrel polishing device, it is possible to perform adjustment so that the medium can be strongly pressed against the additively manufactured article at the time of stirring as compared with the case of other types of barrel polishing devices. Furthermore, since the medium is spherical, the contact of the medium with the additively manufactured article becomes uniform, and thus the occurrence of dents on the surface of the additively manufactured article can be suppressed. The uniform contact means, for example, that the spherical surface of the medium formed with the same curvature abuts even if any part of the medium abuts on the additively manufactured article. The variation in the roughness of the surface due to the contact portion of the medium is suppressed. Moreover, the diameter of the medium can be set according to a size of the barrel polishing device.

### Example

### [Confirmation of Surface Roughness and Residual Stress]

In order to evaluate the effect of the spherical medium made of metal on the additively manufactured article, the processing method of an additively manufactured article was performed on the additively manufactured article.

### [Example]

The preparing an additively manufactured article and a spherical medium was performed. As the additively manufactured article, an additively manufactured article manufactured by a manufacturing device (3D SYSTEMS) that melts a metal powder by irradiation with a laser and performs additive manufacturing was used. The metal powder was austenitic stainless steel powder (SUS316L). The additively manufactured article is a cylinder having a diameter of 12 mm and a height of 130 mm. A steel ball (SSB-3.8) was used as the medium. A diameter of the medium is 3.8 mm. In the accommodating (step S10), the additively manufactured article and the medium were accommodated in a barrel polishing device. The barrel polishing device was a centrifugal barrel polishing device (SKC-32S manufactured by SINTOKOGIO, LTD.). In the stirring (step S12), the additively manufactured article and the medium were stirred with the rotation-revolution ratio set to -1 : 1, the revolution speed set to 200 rpm, and the operating time set to 30 minutes. After completion of the operation, the additively manufactured article was taken out from the barrel polishing device.

### [Comparative Example 1]

In Comparative Example 1, the processing method for an additively manufactured article according to the above-described embodiment is not performed on the additively manufactured article. That is, the accommodating (step S10) and the stirring (step S12) are not performed. The other conditions were the same as those in Example.

### [Comparative Example 2]

In Comparative Example 2, shot peening was performed on the additively manufactured article instead of the processing method for an additively manufactured article according to the above-described embodiment. The device that performed shot peening is a gravity blasting device (MY-30 manufactured by SINTOKOGIO, LTD.). As a shot media used in the shot peening, spherical stainless steel beads (SUS 150B) having a particle size range of 150 nm to 50 µm were used. The projection pressure was 0.5 MPa. After completion of the shot peening, the additively manufactured article was taken out from the gravity blasting device.

### [Comparative Example 3]

In Comparative Example 3, among the conditions according to Example, the medium was replaced with a medium having an acute corner, and the other conditions were the same as those in Example. As the medium, V7-T10 manufactured by SINTOKOGIO, LTD., which is a triangular prism-shaped ceramic medium having a corner portion, was used.

### [Evaluation of Surface Roughness]

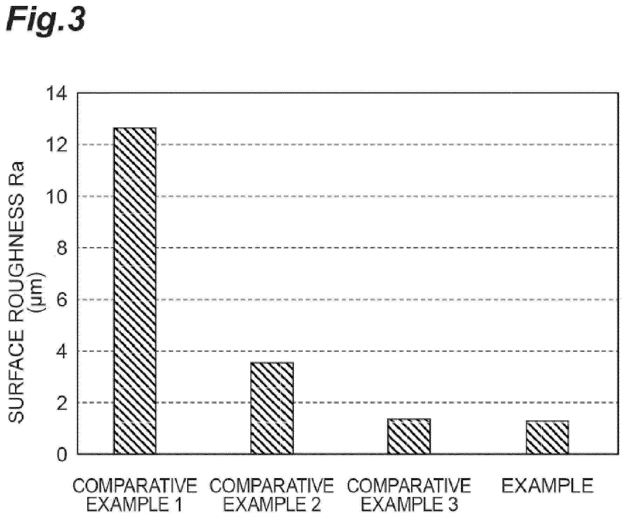

An arithmetic mean roughness Ra as the roughness of the surfaces of Example and Comparative Examples 1 to 3 prepared under the above conditions was measured by a contact surface roughness meter (SURFCOM manufactured by TOKYO SEIMITSU CO., LTD.). The arithmetic mean roughness Ra was calculated based on JIS-B0601:2013. FIG. 3 is a test result of the roughness of the surface of the additively manufactured article with respect to the processing condition according to Example. As illustrated in FIG. 3, the arithmetic mean roughness Ra of Example was 1.308 µm, and the arithmetic mean roughness Ra of Comparative Examples 1 to 3 was 12.687 µm, 3.546 µm, and 1.369 µm, respectively.

When comparing Example with Comparative Example 1, it was confirmed that the roughness of the surface of the additively manufactured article could be significantly reduced by executing the processing method for an additively manufactured article according to the above-described embodiment. A spherical medium made of metal can be generally used during surface processing of an object having a small surface roughness. However, in this processing method for an additively manufactured article, it is considered that the surface roughness of the additively manufactured article can be appropriately reduced because the additively manufactured article can be deformed by stirring the spherical medium made of metal and the additively manufactured article. By comparing Example with Comparative Example 2, it was confirmed that the processing method for an additively manufactured article according to the above-described embodiment significantly contributed to reduction of the surface roughness of an additively manufactured article as compared with the shot peening. When Example and Comparative Example 3 are compared with each other, it is considered that since the medium is spherical, the contact of the medium with respect to the additively manufactured article becomes uniform, and thus formation of dents on the surface of the additively manufactured article is suppressed, and an increase in the roughness of the surface of the additively manufactured article can be suppressed as compared with a medium including an acute corner.

### [Evaluation of Residual Stress]

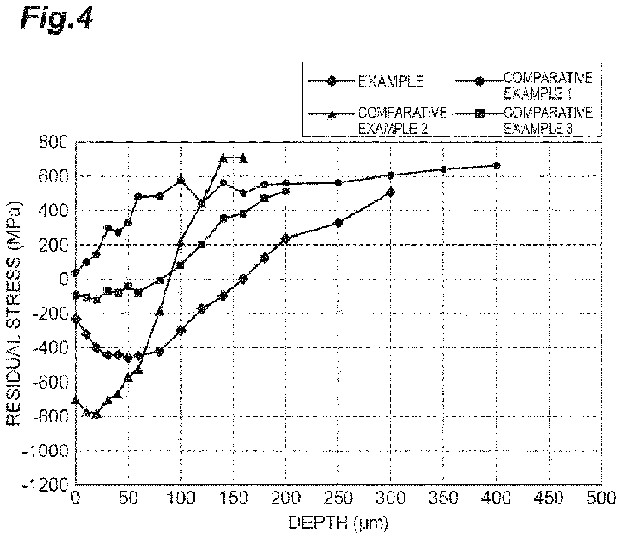

The residual stress was measured as the roughness of the surfaces of Example and Comparative Examples 1 to 3 prepared under the above conditions. The residual stress was measured by a residual stress measurement device described in Japanese Unexamined Patent Publication No. 2007-009356. The residual stress measurement device includes a first detection element that detects an intensity of a diffracted X-ray of a measuring object at a first detection position and a second detection element that detects an intensity of a diffracted X-ray of the measuring object at a second detection position different from the first detection position by a movement mechanism and a movement control unit. FIG. 4 is a test result of the residual stress of the additively manufactured article with respect to the processing condition according to Example. FIG. 4 illustrates that the smaller the value, the larger the residual stress applied to the additively manufactured article. As illustrated in FIG. 4, the residual stress in Example was about -460 MPa, and the residual stresses in Comparative Examples 1 to 3 were about 39 MPa, about -780 MPa, and about -120 MPa, respectively.

Comparing Example with Comparative Example 1, it was confirmed that the residual stress could be applied to the additively manufactured article by executing the processing method for an additively manufactured article according to the above-described embodiment. By comparing Example with Comparative Example 2, it was confirmed that the residual stress close to the shot peening could be applied to the additively manufactured article even in the processing method for an additively manufactured article according to the above-described embodiment although it was slightly inferior to the shot peening. By comparing Example with Comparative Example 3, it was confirmed that the residual stress could be significantly applied to the additively manufactured article by using the spherical medium made of metal. That is, it is considered that since the mass of the medium stirred together with the additively manufactured article is larger in Example, a force of pressing the medium against the additively manufactured article becomes stronger, and the residual stress can be largely applied to the additively manufactured article.

Comparing Example with Comparative Examples 1 to 3, it was confirmed that the processing method for an additively manufactured article according to the above-described embodiment could appropriately reduce the roughness of the surface of the additively manufactured article, and apply the residual stress to the additively manufactured article.

## Claims

1. A processing method for an additively manufactured article, the processing method comprising:
accommodating an additively manufactured article containing metal and a medium made of metal in a barrel polishing device; and
reducing a roughness of a surface of the additively manufactured article and applying a residual stress to the additively manufactured article by stirring the additively manufactured article and the medium,
wherein a surface of the medium includes a curved surface.

2. The processing method for an additively manufactured article according to claim 1, wherein, the applying, includes stirring the additively manufactured article and the medium without using an abrasive grain.

3. The processing method for an additively manufactured article according to claim 1 or 2, wherein the medium includes a steel ball medium.

4. The processing method for an additively manufactured article according to any one of claims 1 to 3, wherein the additively manufactured article includes a blade of an aircraft engine or a medical component.

5. The processing method for an additively manufactured article according to any one of claims 1 to 4, wherein
the barrel polishing device includes a centrifugal barrel polishing device, and
the medium is spherical, and a diameter of the medium is 20 mm or less.
